**Europäisches Patentamt**

**European Patent Office**

**Office européen des brevets**

(19)

(11) Veröffentlichungsnummer: **0 043 059**
**B1**

(12) # EUROPÄISCHE PATENTSCHRIFT

(45) Veröffentlichungstag der Patentschrift:
**25.09.85**

(21) Anmeldenummer: **81104757.0**

(22) Anmeldetag: **20.06.81**

(51) Int. Cl.⁴: **B 65 G 47/90**, B 23 Q 7/04,
B 21 D 43/10, B 30 B 15/30,
B 25 J 11/00

(54) **Transportautomat.**

(30) Priorität: **28.06.80 DE 3024432**
**10.04.81 DE 3114476**

(43) Veröffentlichungstag der Anmeldung:
**06.01.82 Patentblatt 82/1**

(45) Bekanntmachung des Hinweises auf die Patenterteilung:
**25.09.85 Patentblatt 85/39**

(84) Benannte Vertragsstaaten:
**BE FR GB IT NL SE**

(56) Entgegenhaltungen:
**DE - A - 2 220 161**
**DE - A - 2 359 763**
**DE - A - 2 430 462**
**DE - A - 2 630 858**
**DE - A - 2 701 756**
**DE - B - 1 918 746**
**US - A - 2 792 953**

(73) Patentinhaber: **Bilsing, Alfred, Schwedengraben 12,
D-5952 Attendorn (DE)**

(72) Erfinder: **Bilsing, Alfred, Schwedengraben 12,
D-5952 Attendorn (DE)**

(74) Vertreter: **Jochem, Bernd, Dipl.-Wirtsch.-Ing. et al,
Patentanwälte Beyer & Jochem Staufenstrasse 36,
D-6000 Frankfurt/Main (DE)**

**Beschreibung**

Die Erfindung betrifft einen Transportautomaten zur Pressenverkettung.

Es ist aus der DE-A-2 630 858 bekannt, einen derartigen Transportautomaten als «Doppelarm-Gerät» auszubilden. Dabei ist jeweils ein Greifer an jedem Ende eines dreh- und kippbar gelagerten Arms in Längsrichtung unverschieblich gelagert. Die Greifer werden in radialer Richtung gleichzeitig bewegt, indem der Arm insgesamt in Längsrichtung verfahren wird. Dadurch ergeben sich wegen der Notwendigkeit, den Säulen der Pressen ausweichen zu müssen, verhältnismässig lange Zykluszeiten, denn es ist aufseiten beider durch den Transportautomaten verketteter Pressen jeweils eine radiale Vorschub- und Rückzugsbewegung erforderlich, um an den Säulen vorbeizukommen.

Es sind darüberhinaus Doppelarm-Transportautomaten für kleinere Werkstücke bekannt, bei denen die Greifer an den Enden eines heb- und senkbaren, aber nicht kippbaren Arms von einem gemeinsamen Antrieb gleichzeitig in entgegengesetzter Richtung verfahren werden (DE-A-2 220 161 und DE-A-2 430 462). Auch diese Konstruktionen haben den Nachteil verhältnismässig langer Zykluszeiten, weil man z. B. beim Transport von Karosserieblechen nicht schon während der Drehbewegung des Arms um die senkrechte Drehachse den leeren Greifer nahe an die eine Presse heranführen kann, wenn der andere Greifer ein grösseres Werkstück trägt. Bei üblicherweise unterschiedlich hohen Pressentischen kann auch nur immer ein Greifer die richtige Höheneinstellung relativ zu einem der Pressentische haben.

Bei einem weiteren bekannten Transportautomaten gemäss DE-A-2 359 763 sind zwei einzeln heb- und senkbare Arme mit unabhängig voneinander ausfahrbaren Greifern vorhanden. Obgleich die unabhängige Bewegungsmöglichkeit jedes Arms und seines Greifers grundsätzlich die beste Voraussetzung für kürzeste Zykluszeiten ist, wird dieses Ziel bei dem bekannten Transportautomaten verfehlt, weil die selbständige Beweglichkeit jedes Arms mit so grossem zusätzlichen konstruktiven Aufwand und Gewicht erkauft werden muss, dass die Massenträgheit den genannten Vorteil wieder aufhebt. Dies gilt vor allem dann, wenn schwere Werkstücke an langen Armen transportiert werden müssen. Da die an den Armen auftretenden grossen Kippmomente von den Lagern und Führungen jedes Arms aufgenommen werden, müssen diese so stark ausgebildet werden, dass die beiden Arme nicht in Flucht angeordnet werden können, sondern nebeneinander gelagert werden müssen. Wenn jedoch, wie üblich, die Pressen in einer geraden Reihe stehen, können die nebeneinander angeordneten Greifer trotz ihrer voneinander unabhängigen Bewegungsantriebe doch nicht gleichzeitig zum Einsatz kommen, sondern müssen zwischen den einzelnen Arbeitsoperationen in die richtige Winkelstellung gedreht werden.

Der Erfindung liegt die Aufgabe zugrunde, einen Transportautomaten zur Pressenverkettung zu schaffen, mit dem sich im Vergleich zu den bekannten Geräten wesentlich kürzere Arbeitszyklen erreichen lassen, und zur Lösung dieser Aufgabe wird die Kombination folgender für sich bekannter Merkmale vorgeschlagen:

1. Einen um eine mittlere senkrechte Achse drehbaren Doppelarm mit einzeln bewegbaren Greifern an beiden Enden, wobei die Greifer und die senkrechte Achse in einer gemeinsamen senkrechten Ebene liegen;

2. einen den Doppelarm mit beiden Greifern um eine mittlere waagerechte Achse verschwenkender Kippantrieb und

3. unabhängig voneinander nach entgegengesetzten Seiten verfahrbare Verlängerungsteile der Armenden.

Der erfindungsgemässe Transportautomat kann deshalb so schnell sein, weil trotz unabhängiger Ausfahrbarkeit der Armenden das Eigengewicht und das daraus resultierende Moment beider Arme gegenseitig im wesentlichen ausbalanciert ist und nicht am Lager des Arms abgestützt und von dessen Antrieb überwunden werden muss. Es ergibt sich dadurch eine leichte Konstruktion, die bei jedem Arbeitszyklus schnell zu beschleunigen und abzubremsen ist und während der Dreh- und Kippbewegungen der Arme gleichzeitig auch schon beide Greifer unabhängig voneinander auf die richtige Lage ausfahren bzw. einziehen kann.

Durch gleichzeitiges radiales Einziehen der beiden die Greifer tragenden Endteile des Doppelarms vor dessen Drehung und/oder zu Beginn der Drehbewegung lassen sich die dabei zu überwindenden Massen-Trägheitskräfte minimieren. Besonders gross ist jedoch der Zeitgewinn in solchen Fällen, wo seitliche Hindernisse, wie z.B. im Falle der Beschickung von Pressen deren Trag- oder Führungssäulen, dazu zwingen, mit dem vom Greifer erfassten Werkstück zunächst radial einwärts zu verfahren, bevor die Drehbewegung des Arms um seine senkrechte Achse beginnen kann, und am Ende des Transportvorgangs auch wieder erst das Werkstück im Zuge der Drehbewegung an einem Hindernis vorbei bewegt werden muss, bevor der Greifer radial ausfahren und das Werkstück in der vorhergesehenen Position ablegen kann. Der erfindungsgemässe Transportautomat nutzt nämlich in einem solchen Fall die vor dem Ablegen zum radialen Ausfahren des beladenen Greifers erforderliche Zeit, um auch den leeren Greifer radial bis in unmittelbare Nähe des zu ergreifenden Werkstücks auszufahren, so dass nach dem Ablegen des vorher transportierten Werkstücks nur noch kurze, schnell auszuführende Arm- und Greiferbewegungen erforderlich sind, um das nächste Werkstück zu ergreifen.

Wie ersichtlich, bleibt bei dem neuen Transportautomaten der Vorteil gewahrt, dass man trotz mehrerer Greifer mit einem einzigen Drehgelenk und ggf. einem einzigen Kippgelenk auskommt. Darüberhinaus besteht in bevorzugter Ausgestaltung der Erfindung auch noch die Möglichkeit, einen gemeinsamen Antrieb zum Drehen und/ oder einen gemeinsamen Antrieb zum Kippen der beiden Greifer relativ zum Arm vorzusehen, so dass nicht nur die Antriebe zum Drehen und Kippen der beiden die Greifer tragenden Enden des Arms, sondern auch die Antriebe zum Drehen und Kippen der Greifer relativ zum Arm bloss einfach statt doppelt vorhanden sein müssen. Dadurch vereinfacht sich auch die Steuerung der Bewegungen der beiden Greifer ganz wesentlich.

Bei dem neuen Transportautomaten können die Verlängerungsteile mit den Greifern und deren Führungen mit Bezug auf eine die Drehachse des Arms schneidende Querebene symmetrisch ausgebildet sein. Daneben besteht aber auch die Möglichkeit, die Führungen der Verlängerungsteile in der Höhe versetzt zueinander anzuordnen, denn selbst wenn dabei auch die Greifer zueinander etwas versetzt werden, macht sich dies beim Transportvorgang zeitlich kaum bemerkbar, während sich andererseits beträchtliche konstruktive Vorteile ergeben können. Dies gilt vor allem dann, wenn man bei der Herstellung des erfindungsgemässen Transportautomaten auf einen schon vorhandenen einarmigen Transportautomaten zurückgreifen kann, dessen aus einem Mittelteil und einem einseitig ausfahrbaren Verlängerungsteil bestehender Arm durch ein nach der entgegengesetzten Seite ausfahrbares weiteres Verlängerungsteil vervollständigt wird.

Es besteht weiterhin die Möglichkeit, einen erfindungsgemässen Transportautomaten so auszubilden, dass der eine radial verfahrbare Teil an dem anderen radial verfahrbaren Teil geführt ist.

Je nach der gewählten Konstruktion der Führung der beiden in entgegengesetzten Richtungen radial verfahrbaren Teile des Arms wird man die am besten geeigneten Antriebe wählen. Bewährt haben sich getrennte regelbare Hydraulikzylinder, die sich unabhängig voneinander regeln lassen, um gleichzeitig Bewegungen mit unterschiedlicher Geschwindigkeit ausführen zu können. Hydraulikzylinder haben in der vorgeschlagenen Anwendung grundsätzlich den Vorteil, dass sie hinsichtlich Weg und Geschwindigkeit sehr genau regelbar sind.

Eine noch weitergehende Beschleunigung der Transportvorgänge kann mit dem erfindungsgemässen Transportautomaten dadurch erreicht werden, dass Hydraulikzylinder für die radialen Aus- und Einfahrbewegungen der Armenden mechanisch in Reihe angeordnet werden mit einem Pneumatikzylinder. Bei diesem Vorschlag ist berücksichtigt, dass in vielen Fällen zwar verhältnismässig lange radial Wege möglichst schnell zurückgelegt werden müssen, aber nur auf einem kurzen Teil der Wege eine genaue Regelung erforderlich ist. Die schnell auszuführenden radialen Wegstrecken bestimmter Länge werden dann unter Zuhilfenahme der Pneumatikzylinder gefahren, während die regelbaren Hydraulikzylinder die Feinsteuerung der Bewegungen in den Endbereichen übernehmen.

In der Praxis bevorzugt wird eine Ausführung, bei welcher der Verfahrantrieb jedes Verlängerungsteils aus einem doppelt wirkenden regelbaren Hydraulikzylinder mit einer sich nach entgegengesetzten Seiten erstreckenden Kolbenstange besteht, an deren Enden Kettenräder drehbar gelagert sind, über welche eine Kette geführt ist, deren einer Trum an einem radial festen Teil des Doppelarms und deren anderer Trum am Verlängerungsteil befestigt ist.

Schliesslich lässt sich die Arbeitsgeschwindigkeit des erfindungsgemässen Transportautomaten noch dadurch weiter steigern, dass wenigstens ein Teil der durch gemeinsame Antriebsorgane bewirkten Bewegungen der Greifer relativ zum Arm gegenläufig erfolgen, so dass z.B. der eine Greifer eine Kippbewegung nach aufwärts ausführt, während gleichzeitig der andere Greifer nach unten kippt. Dadurch ergibt sich ein gewisser Gewichtsausgleich im Antriebsstrang der beiden Greifer, so dass die Antriebskraft kleiner bzw. die Beschleunigung grösser sein kann.

Die Erfindung wird nachstehend anhand von in der Zeichnung dargestellten Ausführungsbeispielen näher erläutert. Es zeigen:

Fig. 1 eine vereinfachte Seitenansicht, zum Teil im Schnitt eines Doppelarm-Transportautomaten gemäss der Erfindung;

Fig. 2 eine Draufsicht, zum Teil im Schnitt, des Transportautomaten nach Fig. 1;

Fig. 3 eine Teil-Seitenansicht, teilweise im Schnitt, einer weiteren Ausführungsform eines erfindungsgemässen Transportautomaten;

Fig. 4a, b, c verschiedene Ausführungsvarianten antriebsmässiger Kopplungen zwischen den beiden Greifern des Transportautomaten nach Fig. 3;

Fig. 5 einen Querschnitt durch ein Bewegungsgetriebe eines Greifers des Transportautomaten nach Fig. 3;

Fig. 6 eine vergrösserte Seitenansicht, zum Teil im Schnitt, des Getriebes nach Fig. 4a;

Fig. 7 eine vergrösserte Seitenansicht, zum Teil im Schnitt, des Getriebes nach Fig. 4c;

Fig. 8 eine Detail-Draufsicht auf in den Kettenantrieb des Getriebes nach Fig. 7 eingespannte Zugstangen.

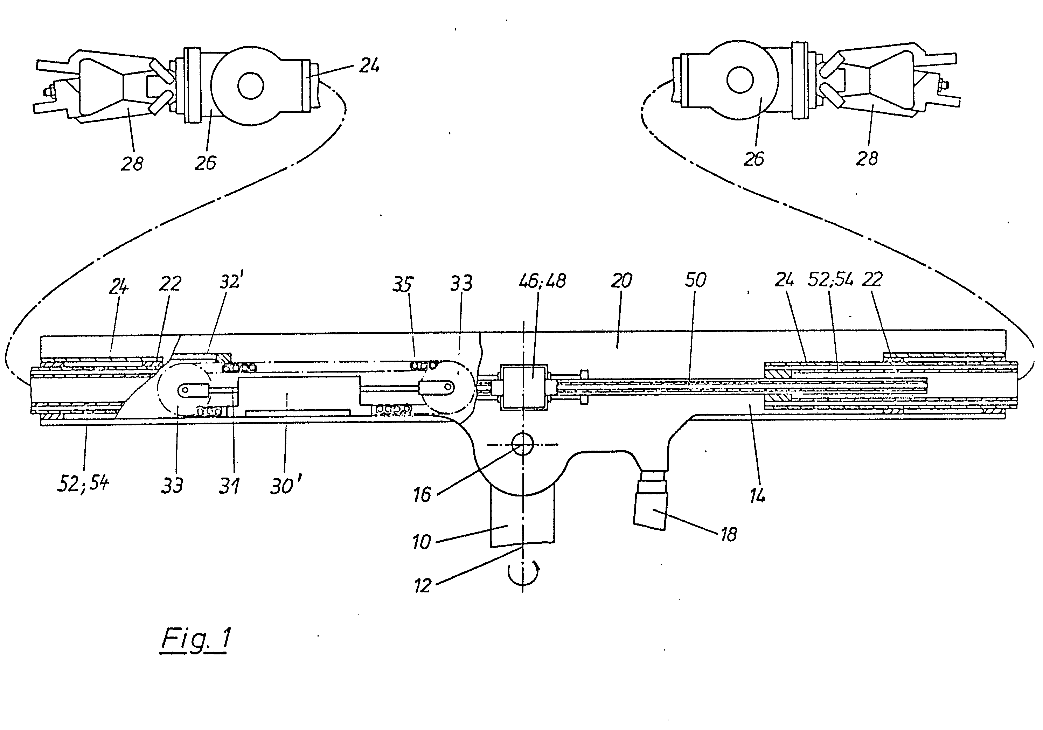

Der in Fig. 1 nur in seinen für die Erfindung wesentlichen Teilen dargestellte Transportautomat hat eine tragende Säule bzw. einen Ständer 10, der um eine senkrechte Achse 12 drehbar ist. Am Ständer 10 ist ein Arm 14 um eine waagerechte Kippachse 16 schwenkbar gelagert. Während der zum Drehen des Ständers 10 um die senkrechte Achse 12 vorgesehene, vorzugsweise geregelte hydraulische Antrieb in der Zeichnung nicht dargestellt ist, wurde der ebenfalls geregelte Hydraulikantrieb zum Verschwenken des Arms 14 um die waagerechte Kippachse 16 in Form eines Kraftzylinders 18 angedeutet.

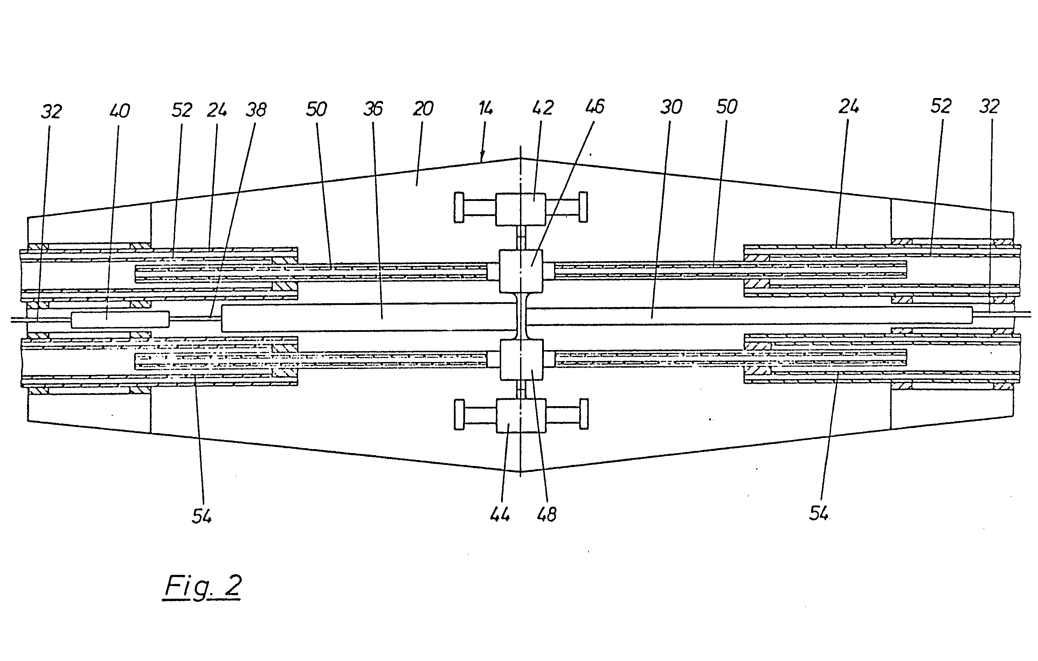

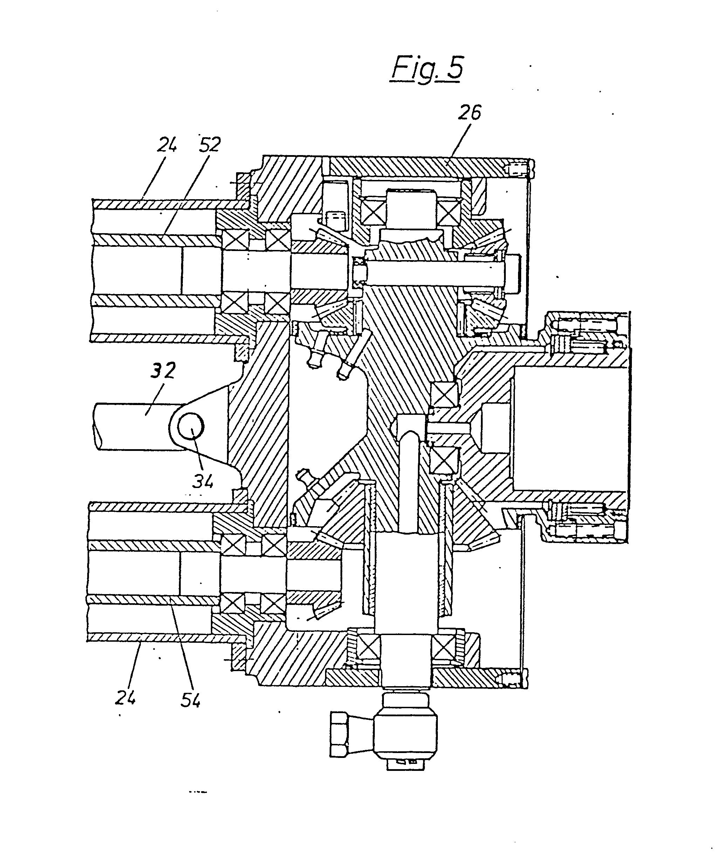

Der Arm 14 ist als Doppelarm ausgebildet. Er besteht aus einem Mittelteil 20, welches Führungen 22 für mit Bezug auf die Drehachse 12 nach entgegengesetzten Seiten radial ausfahrbare Tragrohre 24 enthält. Die letzteren bilden Verlängerungsteile des Arms 14. Sie tragen an ihren freien Enden jeweils ein Greifergetriebe 26, durch welches in bekannter Weise ein angeflanschter Greifer 28 um eine sich in radialer Richtung erstreckende Längsachse drehbar und um eine Querachse kippbar ist. Im Beispielsfall tragen je zwei nebeneinander angeordnete Tragrohre 24 ein Greifergetriebe 26 (vgl. Fig. 2 und Fig. 5).

Der Antrieb zum radialen Ausfahren und Einziehen der Tragrohre 24 ist auf der rechten und der linken Seite der Fig. 2 sowie auf der linken Seite der Fig. 1 in drei verschiedenen Ausführungsformen dargestellt. Auf der rechten Seite der Fig. 2 ist ein geregelter doppeltwirkender Hydraulikzylinder 30 gezeigt, dessen Zylindergehäuse am Mittelteil 20 des Tragarms festgelegt ist und dessen mit 32 bezeichnete Kolbenstange mit ihrem freien Ende gemäss Fig. 5 mittels eines Gelenkbolzens 34 an einem Lagerauge des Gehäuses des Greifergetriebes 26 befestigt ist. Bei der auf der linken Seite der Fig. 2 gezeigten Ausführung besteht der radiale Verfahrantrieb der Tragrohre 24 aus einem am Mittelteil 20 des Arms 14 festgelegten Pneumatikzylinder 36, dessen Kolbenstange 38 mit dem Gehäuse eines geregelten Hydraulikzylinders 40 verbunden ist, dessen Kolbenstange 32 wiederum gemäss Fig. 5 mit dem Gehäuse des Greifergetriebes 26 verbunden ist.

In der Ausführung gemäss der linken Seite der Fig. 1 ist ein doppeltwirkender hydraulischer Kraftzylinder 30′ mit seinem Gehäuse am Mittelteil 20 befestigt. Er hat eine nach beiden Seiten aus dem Gehäuse herausragende Kolbenstange 31 an deren Enden Kettenräder 33 drehbar gelagert sind, über die eine Kette 35 geführt ist, deren unterer Trum am Zylindergehäuse festgelegt ist, während mit einem der Kettenglieder des oberen Kettentrums eine Stange 32′ verbunden ist, welche analog der Kolbenstange 32 mit ihrem Ende am Gehäuse des Greifergetriebes angelenkt ist.

In Fig. 2 ist auch der Antrieb für die Dreh- und Kippbewegungen der Greifer relativ zum Arm 14 gezeigt. Sowohl der Drehantrieb als auch der Kippantrieb besteht jeweils aus einem geregelten hydraulischen Drehzylinder 42 bzw. 44. Diese handelsüblichen Antriebsaggregate bestehen aus Hydraulikzylindern, deren lineare Kolbenbewegung mittels Zahnstange und Zahnrad in die Drehbewegung einer Abtriebswelle umgewandelt wird. Die Abtriebswelle der hydraulischen Drehzylinder 42 und 44 ist jeweils mit der Eingangswelle eines Kegelradgetriebes 46 bzw. 48 drehfest verbunden. Diese Getriebe sind ebenso wie die Drehzylinder 42, 44 am Mittelteil 20 des Arms 14 gelagert und haben rechtwinklig zur Eingangswelle zwei gegenüberliegende Getriebeausgänge, die jeweils mit Vielkeilwellen 50 drehfest verbunden sind. Die letzteren greifen drehfest, aber in Längsrichtung verschieblich in drehbar, aber axial fest in den Tragrohren 24 gelagerte hohle Antriebswellen ein. Die vom Drehzylinder 42 über das Kegelradgetriebe 46 angetriebenen Hohlwellen sind in Fig. 2 mit 52 bezeichnet, während die von den Drehzylindern 44 über das Kegelradgetriebe 48 angetriebenen Hohlwellen mit 54 bezeichnet sind. Die Hohlwellen 52 und 54 haben wenigstens an ihrem radial inneren Ende ein Querschnittsprofil, welches zum Querschnitt der Vielkeilwellen 50 passt.

Auf das in Fig. 5 gezeigte Greifergetriebe braucht nicht näher eingegangen zu werden, da es bei den von der Firma Unimation Inc., Danbury, Connecticut, USA, hergestellten und vertriebenen Transportautomaten Verwendung findet und somit für sich bekannt ist. Wie ohne weiteres aus Fig. 5 ersichtlich, bewirkt eine Drehbewegung der Hohlwelle 52 eine Kippbewegung des mit dem Getriebe 26 verbundenen Greifers um eine quer zu den Hohlwellen 52, 54 liegende Kippachse, während die Drehung der hohlen Antriebswelle 54 den Greifer um eine achsparallel zu den Wellen 52, 54 liegende Achse drehen lässt.

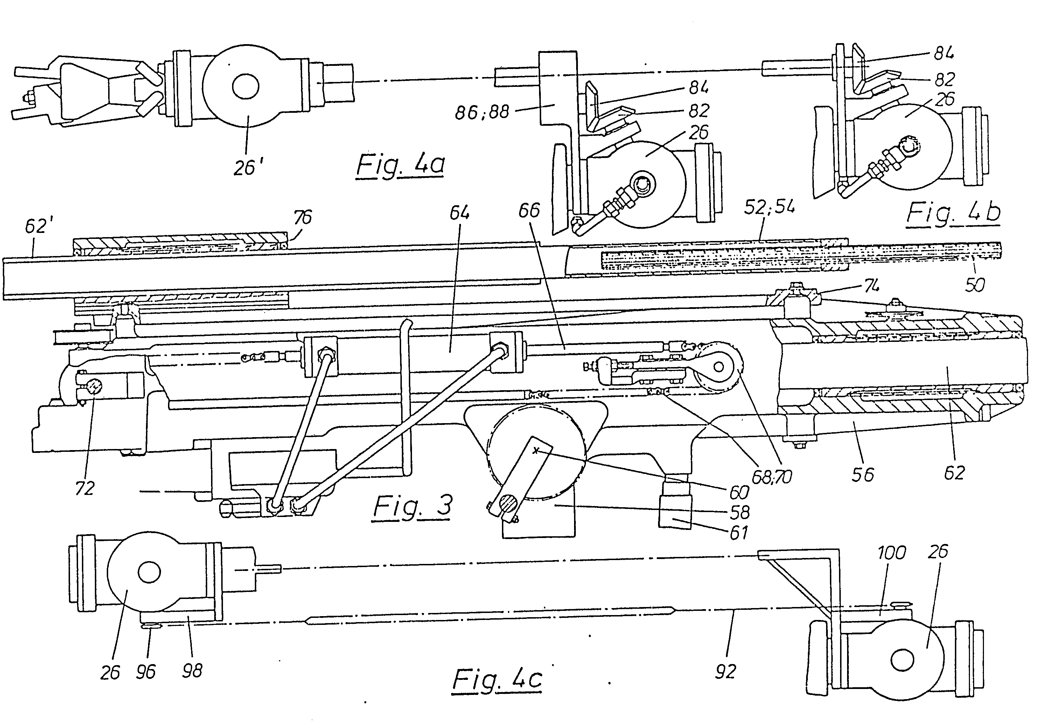

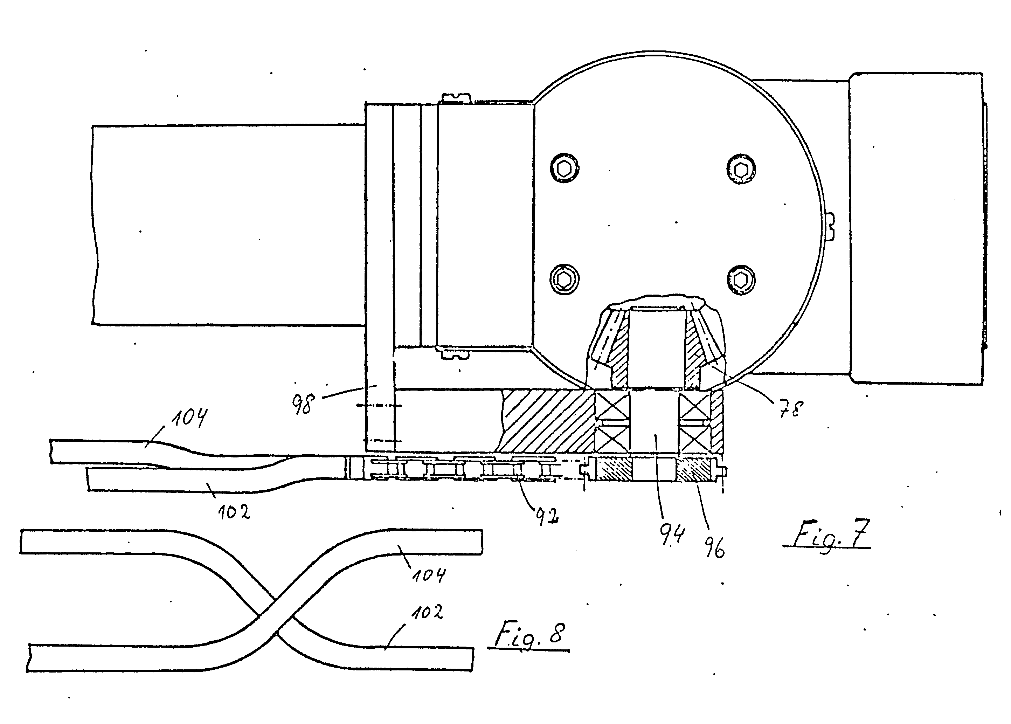

Anhand der Figuren 3 bis 8 wird veranschaulicht, wie ein erfindungsgemässer Transportautomat aus einem bereits vorhandenen einarmigen Modell entwickelt werden kann. Ausgegangen wird dabei von einem Gerät der genannten Firma Unimation Inc. Dieses hat einen insgesamt mit 56 bezeichneten Arm, der auf einem Ständer 58 gelagert und um eine nicht gezeigte senkrechte Achse sowie zusätzlich um eine waagerechte Achse 60 schwenkbar ist. Als Schwenkantrieb für die Bewegung um die Schwenkachse 60 dient ein geregelter Hydraulikzylinder 61.

In dem Arm 56 sind mit seitlichem Zwischenabstand zwei Tragrohre 62 gelagert und in axialer Richtung verschieblich geführt. Als Linearantrieb für die Bewegung der Tragrohre 62 dient ein nicht gezeigter geregelter Hydraulikzylinder entsprechend dem Hydraulikzylinder 30 nach Fig. 2, dessen Kolbenstange gemäss Fig. 5 am Gehäuse eines für sich bekannten Greifergetriebes 26 befestigt ist, welches fest mit den mit Bezug auf Fig. 3 nach rechts aus dem Arm 56 herausführenden Tragrohren 62 verbunden ist.

Durch die Tragrohre 62 hindurch erstrecken sich hohle Antriebswellen 52, 54 gemäss Fig. 5. Eine dieser Antriebswellen dient entsprechend der Ausführung nach Fig. 1 und 2 zum Drehen, die andere zum Kippen des Greifers 28. Der Antrieb beider Wellen 52, 54 erfolgt jedoch bei der Ausführung nach Fig. 3 durch jeweils einen Kraftzylinder 64, dessen Kolben mit Kolbenstange 66 in eine umlaufend geführte Kette 68 eingespannt ist. Diese Kette läuft mit Bezug auf Fig. 3 rechts über ein Spannrad 70 und links über ein auf einer Welle 72 gelagertes Kettenrad, welches über ein nicht gezeigtes Winkelgetriebe auf eine den Vielkeilwellen 50 gemäss Fig. 1 und 2 entsprechende Vielkeilwelle wirkt, die ihrerseits drehfest, aber axial verschieblich in ein passendes Vielkeil-Innenprofil der in den Tragrohren 62 drehbar gelagerten Hohlwellen 52 bzw. 54 eingreift.

Insoweit, wie bisher beschrieben, ist der Transportautomat gemäss Fig. 3 bekannt. Neu ist die Anordnung eines weiteren Greifergetriebes 26′ auf der mit Bezug auf Fig. 3 linken Seite des Arms 56 (siehe Fig. 4a und 4c). Um dieses zusätzliche Getriebe 26′ für einen zweiten Greifer 28 zu lagern, ist im Beispielsfall oben auf dem Arm 56 eine Lagerplatte 74 aufgeschraubt, die auf der mit Bezug auf Fig. 3 linken Seite nebeneinander zwei Lager 76 für zusätzliche Tragrohre 62' trägt. Die Letzteren entsprechen den oben erwähnten Tragrohren 62 und sind in derselben Weise, wie diese mit dem Getriebe 26 verbunden sind, an dem Getriebe 26' befestigt. Ausserdem können sich gemäss Fig. 4a, b durch die Tragrohre 62' Antriebswellen 52', 54' erstrecken, welche den erwähnten Antriebswellen 52, 54 entsprechen.

Weiterhin ist an der Lagerplatte 74 ein nicht gezeigter geregelter Hydraulikzylinder entsprechend dem Hydraulikzylinder 30 nach Fig. 2 festgelegt, dessen Kolbenstange entsprechend der Kolbenstange 32 am Gehäuse des Greifergetriebes 26' befestigt ist.

In bevorzugter Ausführung der Erfindung besteht zwischen den beiden Getrieben 26 und 26' eine Antriebsverbindung. Diese kann selbstverständlich in unterschiedlicher Weise ausgeführt werden, so dass die in Fig. 3 bis 8 gezeigten Ausführungen nur als Beispiele anzusehen sind, denen andere Ausführungen zur Seite gestellt werden können.

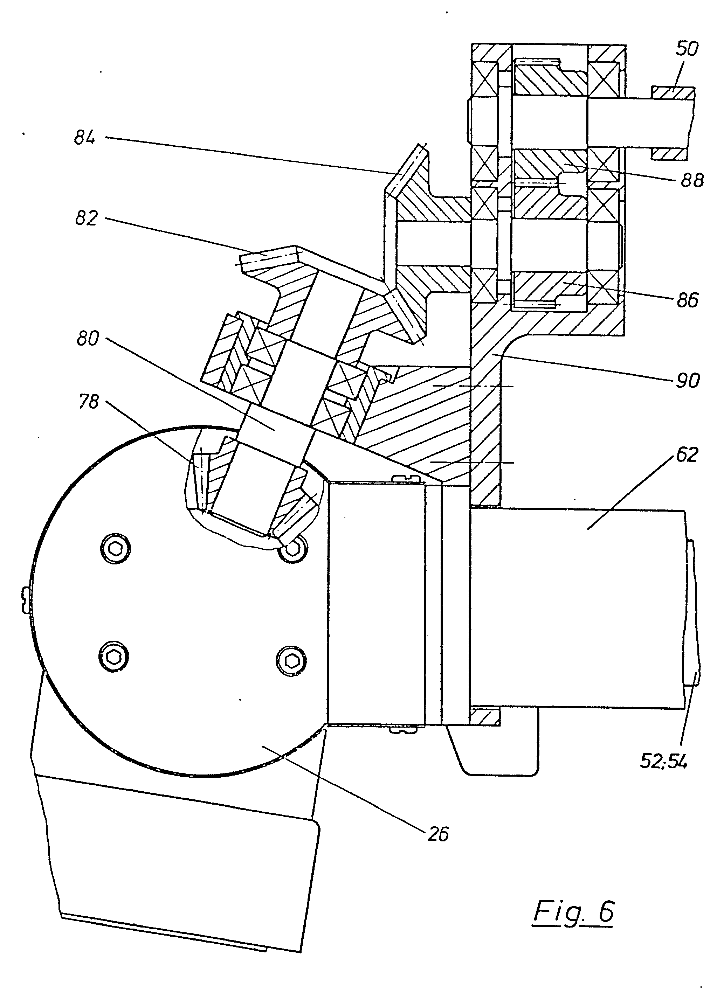

Gemäss Fig. 4a und Fig. 6 werden die Dreh- und Kippbewegungen des Getriebes 26 über zwei zusätzliche Kegelräder 78, welche mit entsprechenden Kegelrädern des Greifergetriebes in Eingriff stehen, abgenommen und über Zwischenwellen 80 nach oben aus dem Getriebe 26 herausgeführt. Über ein ein Winkelgetriebe bildendes Kegelradpaar 82, 84 und ein ein Umkehrgetriebe bildendes Stirnradpaar 86, 88 wird das Antriebsmoment jeweils auf eine von zwei parallelen Vielkeilwellen 50' übertragen, welche gemäss Fig. 3 jeweils undrehbar, aber axial verschieblich mit den hohlen Antriebswellen 52', 54' in Eingriff stehen.

Falls die Umkehr der Drehrichtung nicht erforderlich ist, kann gemäss Fig. 4b das Umkehrgetriebe 86, 88 entfallen.

Um die Zwischenwelle 80, das Winkelgetriebe 82, 84 und ggf. das Umkehrgetriebe 86, 88 zu lagern, kann eine geeignete Halterung 90 an den Enden der Tragrohre 62 befestigt sein.

Für die Drehmomentübertragung vom Getriebe 26 zum Getriebe 26' können gemäss Fig. 4c und Fig. 7, 8 alternativ zu den Ausführungen nach Fig. 4a, b Kettentriebe 92 vorgesehen sein. In diesem Fall greift zweckmässigerweise in beide Getriebe 26 und 26' ein Kegelrad 78 ein, welches über eine Zwischenwelle 94 drehfest mit einem Kettenrad 96 verbunden ist. Die Anordnung der Getriebe 26 und 26' ist gemäss Fig. 4c so gewählt, dass die Zwischenwelle 94 bei dem einen Getriebe nach oben und bei dem anderen Getriebe nach unten herausgeführt ist. Für die Lager der Zwischenwelle 94 sind wiederum geeignete Halterungen 98 bzw. 100 an den Enden der Tragrohre 62 bzw. 62' angebracht.

In die Kettentriebe 92 sind vorzugsweise Zugstangen 102, 104 eingespannt. Durch Kröpfung dieser Zugstangen besteht die Möglichkeit, sie zu kreuzen, um eine Umkehr der Drehrichtung zu erreichen. Die Zugstangen können in Lagern geführt sein.

Ein oder mehrere nicht gezeigte Kettenspannräder sorgen für gleichmässige Kettenspannung trotz unterschiedlicher Abstände der Getriebe 26 und 26'.

Die Ausführungsbeispiele nach Fig. 3 bis 8 zeigen Konstruktionen, bei denen die Längsachse des zusätzlichen Greifergetriebes 26' versetzt zu der des Greifergetriebes 26 liegt.

Der Höhenversatz der Längsachsen der Greifer kann in einfacher Weise durch die Steuerung ausgeglichen werden und bietet den Vorteil der einfacheren mechanischen Verbindung zwischen den beiden Getrieben. Selbstverständlich besteht daneben auch die Möglichkeit, die beiden Getriebe koaxial anzuordnen, wobei entweder die Antriebsverbindung zwischen ihnen zweimal abgewinkelt sein oder sich durch den Arm 56 hindurch erstrekken müssen.

Die vorstehend beschriebenen Ausführungsbeispiele betrafen jeweils Transportautomaten, deren Arm aus einem dreh- und schwenkbaren Mittelteil und daran gelagerten und geführten, nach entgegengesetzten Seiten ausfahrbaren Verlängerungsteilen besteht. Es versteht sich, dass der Arm auch aus nur zwei in Längsrichtung relativ zueinander verschiebbaren Teilen bestehen kann, wobei das eine Teil am Ständer nicht nur drehbar und kippbar gelagert, sondern auch in seiner Längsrichtung verschieblich geführt ist, während das andere Teil an dem zuerst genannten Teil in Längsrichtung verschiebbar geführt ist. Ebenso wie bei den detailliert beschriebenen Ausführungen können auch bei der zuletzt erwähnten Konstruktion wahlweise gemeinsame Antriebe oder Einzelantriebe für die Dreh- und/oder Kippbewegungen der beiden Greifer vorgesehen sein.

In weiterer Ergänzung der Ausführung nach Fig. 3 besteht die Möglichkeit, die Gehäuse der Getriebe 26 und 26' durch eine Stange miteinander zu verbinden, das Greifergetriebe 26 in der oben beschriebenen Weise durch einen geregelten Hydraulikzylinder radial zu verfahren, jedoch den zum gleichzeitigen radialen Verfahren des gegenüberliegenden Greifergetriebes 26' erforderlichen Antriebszylinder nicht an der Lagerplatte 74 festzulegen, sondern in die Verbindungsstange zwischen den beiden Getriebegehäusen zu integrieren.

Wenn die Verfahrgeschwindigkeit dieses letztgenannten Kraftzylinders grösser ist als die Geschwindigkeit des auf das Greifergetriebe 26 wirkenden Verfahrantriebs, können beide Greifer gleichzeitig radial ausfahren bzw. eingezogen werden. Daneben besteht die Möglichkeit, durch Betätigung allein des normalen radialen Antriebs für den mit dem Getriebe 26 verbundenen Greifer den gegenüberliegenden Greifer über die erwähnte Verbindungsstange gleichläufig mitzunehmen.

Bei der Ausführung nach Fig. 1 und 2 können anstelle des Umkehrgetriebes 86, 88 nach Fig. 4a Kegelradgetriebe 46 und/oder 48 Verwendung finden, deren Getriebeausgangswellen mit entgegengesetzter Drehrichtung laufen.

**Patentansprüche**

1. Transportautomat zur Pressenverkettung, gekennzeichnet durch folgende für sich bekannte Merkmale

1. einen um eine mittlere senkrechte Achse (12) drehbaren Doppelarm (14; 56, 76) mit einzeln bewegbaren Greifern (28) an beiden Enden, wobei die Greifer (28) und die senkrechte Achse (12) in einer gemeinsamen senkrechten Ebene liegen;

2. einen den Doppelarm (14; 62, 62') mit beiden Greifern (28) um eine mittlere waagerechte Achse (16) verschwenkenden Kippantrieb (18);

3. unabhängig voneinander nach entgegengesetzten Seiten verfahrbare Verlängerungsteile (24; 62, 62') der Armenden.

2. Transportautomat nach Anspruch 1, dadurch gekennzeichnet, dass der Verfahrantrieb jedes Verlängerungsteils (24, 62, 62') aus einem doppeltwirkenden regelbaren Hydraulikzylinder (30') mit einer sich nach entgegengesetzten Seiten erstreckenden Kolbenstange (31) besteht, an deren Enden Kettenräder (33) drehbar gelagert sind, über welche eine Kette (35) geführt ist, deren einer Trum an einem radial festen Teil des Doppelarms (14; 56, 76) und deren anderer Trum am Verlängerungsteil (24; 62, 62') befestigt ist.

3. Transportautomat nach Anspruch 1 oder 2, dadurch gekennzeichnet, dass die Längsachsen der Greifer (28) in der Höhe versetzt zueinander angeordnet sind.

4. Transportautomat nach einem der Ansprüche 1 bis 3, dadurch gekennzeichnet, dass ein gemeinsamer Antrieb (44, 64) zum Drehen und/oder ein gemeinsamer Antrieb (42, 64) zum Kippen der beiden Greifer (28) relativ zum Arm (14, 56) vorhanden ist.

**Claims**

1. Automatic transporting device for the interlinking of presses, characterised by the following per se known features:

1. a double arm (14; 56, 76) rotatable about a central perpendicular axis (12) and with individually movable grippers (28) at both ends, the grippers (28) and the vertical axis (12) being disposed in a common perpendicular plane;

2. a tilting drive (18) pivoting the double arm (14; 62, 62') with both grippers (28) about a central horizontal axis (16);

3. extension parts (24; 62, 62') of the arm ends which are mobile independently of each other towards opposite sides.

2. Automatic transporting device according to claim 1 characterised in that the propulsion drive of each extension part (24; 62, 62') consists of a double acting regulable hydraulic cylinder (30') with a piston rod (31) extending towards opposite sides, at the ends of which chain wheels (33) are rotatably mounted, over which is guided a chain (35), one strand of which is fixed on a radially fixed part of the double arm (14; 56, 76) while the other strand of which is fixed on the extension part (24; 62, 62').

3. Automatic transporting device according to claim 1 or 2 characterised in that the longitudinal axes of the grippers (28) are disposed so as to be vertically offset in relation to one another.

4. Automatic transporting device according to one of claims 1 to 3 characterised in that a common drive (44, 64) is provided to rotate and/or a common drive (42, 64) is provided to tilt the two grippers (28) in relation to the arm (14, 56).

**Revendications**

1. Transporteur automatique pour relier des presses en chaîne, caractérisé par les caractéristiques suivantes connues en elles-mêmes:

1. un double bras (14, 56, 76) pouvant tourner autour d'un axe (12) vertical central, pourvu aux deux extrémités d'organes de prise (28) mobiles individuellement, les organes de prise (28) et l'axe vertical (12) se situant dans un plan vertical commun;

2. un entraînement de basculement (18) faisant pivoter le double bras (14, 56, 76) avec les deux organes de prise (28) autour d'un axe (16) horizontal médian;

3. des éléments de prolongement (24, 62, 62') des extrémités du bras, déplaçables indépendamment l'un de l'autre vers des côtés opposés.

2. Transporteur automatique selon la revendication 1, caractérisé en ce que l'entraînement de déplacement de chaque élément de prolongement (24, 62, 62') est constitué par un cylindre hydraulique (30') réglable, à double effet, pourvu d'une tige de piston (31) s'étendant vers des côtés opposés, et aux extrémités de laquelle sont montées de façon à pouvoir tourner des roues à chaînes (33) sur lesquelles passe une chaîne (35), dont un brin est fixé à une partie fixe en direction radiale du double bras (14, 56, 76) et dont l'autre brin est fixé à l'élément de prolongement (24, 62, 62').

3. Transporteur automatique selon la revendication 1 ou 2, caractérisé en ce que les axes longitudinaux des organes de prise (28) sont disposés décalés en hauteur l'un par rapport à l'autre.

4. Transporteur automatique selon l'une des revendications 1 à 3, caractérisé en ce qu'il est prévu un entraînement commun (44, 64) pour faire tourner et/ou un entraînement commun (42, 64) pour faire basculer les deux organes de prise (28) par rapport au bras (14, 56).

Fig. 1

52;54

0 043 059

32 40 52 24 38 50 36 20 14 42 46 30 50 24 52 32

0 043 059

6

54 44 48 54

*Fig. 2*

Fig. 4a

Fig. 4b

Fig. 4c

Fig. 3

Fig.5

_Fig. 6_

Fig. 7

Fig. 8

98

104

102

92

94

96

78

17

0 043 059